# EUROPÄISCHE PATENTSCHRIFT

(11) **EP 1 191 662 B1**
(45) Veröffentlichungstag und Bekanntmachung des Hinweises auf die Patenterteilung: **16.06.2010**
(21) Anmeldenummer: 00810861.5
(22) Anmeldetag: 21.09.2000
(51) Int. Cl.: H02J 13/00, G06F 17/50

(54) **Konfiguration eines Leitsystems einer elektrischen Schaltanlage**
Configuration of a control system of an electrical installation
Configuration d'un système de contrôle d'une installation électrique

(43) Veröffentlichungstag der Anmeldung: 27.03.2002
(73) Patentinhaber: ABB Schweiz AG, 5400 Baden (CH)
(72) Erfinder: Wimmer, Wolfgang, 5323 Rietheim (CH); Qiu, Xiaobing, 5400 Baden (CH)
(74) Vertreter: ABB Patent Attorneys

(56) Entgegenhaltungen:
- EP-A- 0 715 266
- FOLEY M ET AL: "OBJECT-ORIENTED ON-LINE NETWORK ANALYSIS" IEEE TRANSACTIONS ON POWER SYSTEMS,IEEE INC. NEW YORK,US, Bd. 10, Nr. 1, 1. Februar 1995 (1995-02-01), Seiten 125-132, XP000513227 ISSN: 0885-8950

## Beschreibung

### Technisches Gebiet

Die Erfindung bezieht sich auf das Gebiet der Anlagenleittechnik, insbesondere der Anlagenleittechnik für Hoch-, Mittel- oder Niederspannungsschaltanlagen. Sie bezieht sich auf eine Verfahren und ein Computerprogrammprodukt zur Konfiguration eines Leitsystems einer elektrischen Schaltanlage gemäss dem Oberbegriff der Patentansprüche 1 und 7.

### Stand der Technik

Eine Anlage, insbesondere eine Hoch- oder Mittelspannungsschaltanlage, wird durch ein verteiltes Anlagenleitsystem aus Feldleitgeräten, die über Kommunikationsbusse miteinander verbunden sind, gesteuert. Ein Anlagenleitsystem weist beispielsweise Feldleitgeräte und eine Bedienstation auf, sowie verschiedene Kommunikationsbusse und Buskoppler. Die Leitgeräte steuern, regeln, überwachen und schützen Primärgeräte der Anlage, welche den eigentlichen Anlagenzweck erfüllen. Primärgeräte sind beispielsweise Schalter, Antriebe, Generatoren oder Transformatoren. Buskoppler verbinden Kommunikationsbusse, welche unterschiedliche Hardware- und/oder Protokoll-Eigenschaften aufweisen, so dass die Kommunikationsbusse zusammen ein Kommunikationsnetzwerk bilden. Durch das Kommunikationsnetzwerk kommunizieren einzelne Softwarefunktionen der Leitgeräte miteinander und mit Funktionselementen oder Programmelementen der Bediengeräte. Softwarefunktionen der Leitgeräte, also Programmelemente, welche auf einem Leitgerät speicherbar und ausführbar sind, werden im folgenden als Leitsystemfunktionselemente oder kürzer als Leitsystemfunktionen bezeichnet. Bei herkömmlichen Verfahren zur Konfiguration dieser Leitsystemfunktionen und ihrer Kommunikationsmittel wird folgendermassen vorgegangen: Die Leitgeräte respektive ihre Leitsystemfunktionen werden mit jeweils eigenen Engineeringwerkzeugen konfiguriert und parametrisiert. Die Engineeringwerkzeuge verwenden Modelle zur standardisierten Darstellung von Leitsystemfunktionen, beispielsweise gemäss IEC Standard 61850. Diese Modelle umfassen insbesondere Leitgerätemodelle, Leitfunktionsmodelle und Kommunikationsmodelle, das heisst Standards zur Beschreibung von Leitgeräten, Leitsystemfunktionen, etc. Dank der standardisierten Beschreibung können Leitgeräte verschiedener Hersteller gemeinsam konfiguriert werden.

Schnittstellen zwischen Leitsystemfunktionen werden durch Signallisten beschrieben. Mit einem Integrationswerkzeug werden die Verbindungen zwischen einzelnen Signalen spezifiziert. Dazu sind Kenntnisse über die Art und Funktionsweise der einzelnen Leitsystemfunktionen wie auch über einen Aufbau der Schaltanlage erforderlich. Diese Spezifikation ist aufwendig und fehleranfällig.

### Darstellung der Erfindung

Es ist deshalb Aufgabe der Erfindung, ein Verfahren und ein Computerprogrammprodukt zur Konfiguration eines Leitsystems einer elektrischen Schaltanlage der eingangs genannten Art zu schaffen, welche die Konfiguration weiter automatisieren.

Diese Aufgabe lösen ein Verfahren und ein Computerprogrammprodukt zur Konfiguration eines Leitsystems einer elektrischen Schaltanlage mit den Merkmalen der Patentansprüche 1 und 7.

Das Dokument EP0 715 266 A offenbart ein Verfahren nach dem Oberbegriff des Anspruchs 1.

Das erfindungsgemässe Verfahren zur Konfiguration eines Leitsystems einer elektrischen Schaltanlage verwendet ein Primärgerätemodell und ein Topologiemodell der Schaltanlage. Um eine erste Leitsystemfunktion zu konfigurieren wird diese einem Primärgerät und einem Leitgerät zugeordnet, worauf anhand des Primärgerätemodells und des Topologiemodells automatisch zweite Leitsystemfunktionen bestimmt werden, deren Daten oder Prozeduren die erste Leitsystemfunktion während eines Betriebs der Anlage benötigt.

In einer bevorzugten Variante der Erfindung geschieht eine automatische Bestimmung von Kommunikationsverbindungen zwischen der ersten Leitsystemfunktion und den zweiten Leitsystemfunktionen anhand des Kommunikationsmodells. Dabei sind die zweiten Leitsystemfunktionen jeweils bereits Leitgeräten zugeordnet oder automatisch zuordnungsbar.

Dadurch, dass das erfindungsgemässe Verfahren nicht nur ein Modell der Leitgeräte und Leitsystemfunktionen sondern auch ihrer Relationen zu den Primärgeräten und der Topologie der Schaltanlage aufweist, entfällt die aufwendige Zuordnung von Signalen zu Leitsystemfunktionen. Bisher getrennte Abläufe zum Engineering von Leitsystemfunktionen und von Kommunikationsmitteln, sowie die Spezifikation von Verbindungen zwischen Signalen mittels eines Integrationswerkzeugs sind im erfindungsgemässen Verfahren gemeinsam automatisiert.

In einer bevorzugten Variante der Erfindung wird das Verfahren in einer off-line Engineeringphase der Schaltanlage ausgeführt. Mit dem Verfahren werden Konfigurationsparameter von Leitsystemfunktionen und Kommunikationseinheiten bestimmt, die in die entsprechenden Leitsystemfunktionen respektive Geräte ladbar sind.

In einer weiteren bevorzugten Variante der Erfindung wird das Verfahren in einer online Konfigurationsphase der Schaltanlage ausgeführt. Mit dem Verfahren werden Konfigurationsparameter von Leitsystemfunktionen und Kommunikationseinheiten bestimmt und in die entsprechenden Leitsystemfunktionen respektive Geräte geladen.

Weitere bevorzugte Ausführungsformen gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: eine Beschreibung von erfindungsgemäss verwendeten Modellen in UML (Unified Modelling Language)-Notation; und
- Figur 2: eine schematische Darstellung einer Schaltanlage und eines zugeordneten Leitsystems.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

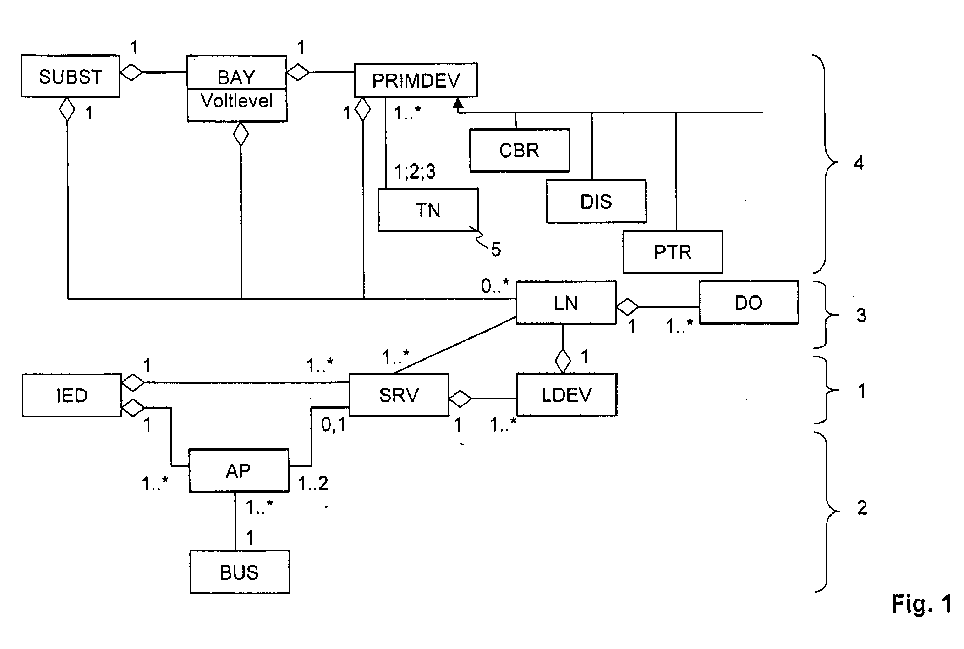

Die Figur 1 zeigt eine Beschreibung von erfindungsgemäss verwendeten Modellen in einer bekannten UML (Unified Modelling Language)-Notation. Dabei stehen Verbindungslinien für eine Beziehung oder Zuordnung zwischen Entitäten. Parallelogramme am Ende einer Verbindungslinie stehen für eine "enthält"-Beziehung, Pfeile stehen für eine "Klasse-Unterklasse"-Beziehung. Ziffern an Enden von Beziehungen besagen, wieviele Entitäten an einer Beziehung teilhaben, wobei ein Stern (*) eine Zahl grösser als 1 bezeichnet.

Diese Modellbeschreibung definiert Zusammenhänge zwischen einem Leitgerätemodell, einem Kommunikationsmodell, einem Leitfunktionsmodell, einem Primärgerätemodell und einem Topologiemodell. Diese Modelle selber beschreiben und repräsentieren entsprechende Systeme und Komponenten einer Schaltanlage.

Wenn also im Folgenden beispielsweise von einem "Leitgerät" die Rede ist, so ist zu unterscheiden zwischen
1. einem realen Leitgerät,
2. dem Leitgerätemodell, welches das reale Leitgerät in einer Datenverarbeitungsanlage oder auf einem maschinenlesbaren Speichermedium repräsentiert, und
3. der Modellbeschreibung zur Definition von Inhalten und Strukturen von Leitgerätemodellen.

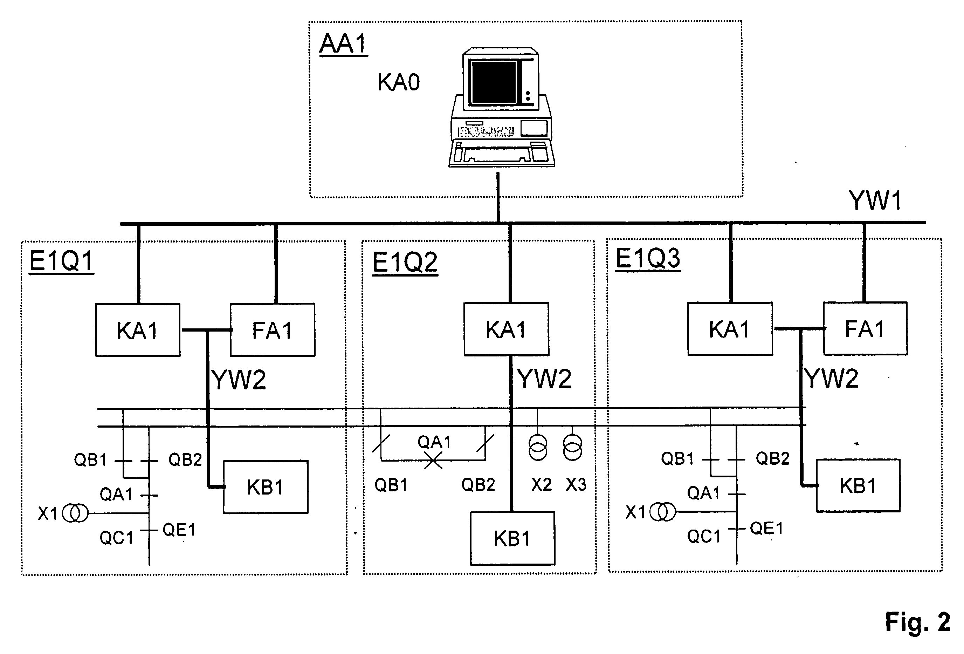

Wo nicht aus dem Zusammenhang klar, wird der Unterschied durch entsprechende vor- oder nachgestellte Begriffe verdeutlicht. Aufgrund der obigen Unterscheidung werden auch unterschiedliche Bezugszeichen verwendet, beispielsweise in Figur 1 "CBR" für Schalter als Elemente der Modellbeschreibung, und in Figur 2 "QA1" für individuelle Schalter der realen Anlage respektive für ihre Repräsentation im Leitgerätemodell. Analoges gilt für Kommunikationsmittel, Leitfunktionen, Primärgeräte und Topologieeinheiten.

Das Leitgerätemodell beschreibt einzelne Leitgeräte und wird selber durch eine Leitgerätemodellbeschreibung beschrieben. Ein Leitgerät ist beispielsweise ein Feldgerät oder eine Untereinheit eines Geräteschranks mit einer eigenen Datenverarbeitungseinheit, Speichermitteln und gegebenenfalls zugeordneten Sensoren. Gemäss der Leitgerätemodellbeschreibung 1 wird ein Leitgerät durch ein IED ("Intelligent Electronic Device") dargestellt. Ein Intelligent Electronic Device IED enthält mindestens einen Server SRV welcher anderen Geräten oder Leitsystemfunktionen nach einem bekannten Client/Server-Modell Daten oder Funktionen zur Verfügung stellt. Ein Server enthält mindestens ein Logisches Gerät LDEV.

Das Kommunikationsmodell beschreibt Kommunikationseinheiten oder Kommunikationsmittel eines Kommunikationssystems der Schaltanlage und wird selber durch eine Kommunikationsmodellbeschreibung 2 beschrieben. Kommunikationseinheiten sind Netzwerkknoten AP und Kommunikationsbusse BUS. Wie aus dem Modell gemäss Figur 1 ersichtlich ist, enthält ein Intelligent Electronic Device IED mindestens einen Netzwerkknoten AP. Einer oder mehrere Netzwerkknoten AP sind einem Kommunikationsbus BUS zugeordnet.

Das Leitfunktionsmodell beschreibt Leitsystemfunktionselemente, kurz Leitsystemfunktionen genannt, und wird selber durch eine Leitfunktionsmodellbeschreibung 3 beschrieben. Die Beschreibung basiert vorzugsweise auf dem IEC-Standard 61850. Der Standard definiert unter anderem Leitsystemfunktionen für die Stationsleittechnik, sowie entsprechende Datentypen und Kommunikationsverbindungen. Eine kleinste Einheit von Leitsystemfunktionen wird auch, wie im IEC Standard 61850, als "Logical Node" oder logischer Knoten LN bezeichnet. Solche Leitsystemfunktionen sind beispielsweise Programmelemente zur Ansteuerung eines Schalters oder eines Trenners, für eine Überstromerfassung, einen Distanzschutz oder eine Wiedereinschaltfunktion. Einer oder mehrere Logische Knoten LN sind im Leitgerätemodell als Logisches Gerät LDEV zusammengefasst beschrieben. Eine Funktion ist als Funktionselement oder Programmelement implementiert, also als Computerprogrammcode, der auf einem Leitgerät speicherbar und ausführbar ist. Ein Logischer Knoten LN enthält Datenobjekte DO. Datenobjekte DO repräsentieren einen oder mehrere gemessene oder berechnete Signalwerte oder Statusattribute.

Das Primärgerätemodell beschreibt Primärgeräte und wird selber durch eine Primärgerätemodellbeschreibung 4 beschrieben. Ein Primärgerät ist beispielsweise ein Schalter CBR, ein Trenner DIS oder ein Transformator PTR. Ein Primärgerät PRIMDEV ist einem Schaltfeld BAY zugeordnet, dieses wiederum einer Unterstation SUBST.

Das Topologiemodell beschreibt Topologieeinheiten und wird selber durch eine Topologiemodellbeschreibung 5 beschrieben. Die Topologieeinheiten und ihre Beziehungen beschreiben die Topologie der Hoch- oder Mittelspannungsteile der Schaltanlage und von Verbindungen zwischen Unterstationen. Eine Topologieeinheit ist beispielsweise ein Feldknoten, eine Sammelschiene oder eine Abgangsleitung. Eine Modellklasse "Topologischer Knoten" TN fasst eine Beschreibung dieser Einheiten zusammen.

Erfindungsgemäss sind die verschiedenen Modelle miteinander verbunden: Erstens sind Primärgeräte PRIMDEV und Topologische Knoten TN miteinander verbunden, so dass eine Verschaltung der realen Primärgeräte über die realen Topologieeinheiten darstellbar ist. Beispielsweise sind einem realen Primärgerät wie einem Schalter, diejenigen Knoten, beispielsweise zwei Sammelschienen, zugeordnet, zwischen welchen der Schalter angeordnet ist. Je nach Art des Primärgerätes PRIMDEV sind ihm ein oder mehrere Topologische Knoten TN zugeordnet. Zweitens sind Logische Knoten LN und Primärgeräte PRIMDEV einander zugeordnet, so dass darstellbar ist, wie Primärgeräte und Leitsystemfunktionen einander zugeordnet sind.

Anhand von Figur 2 wird das erfindungsgemässe Verfahren mittels zweier Beispiele erklärt. Figur 2 zeigt eine schematische Darstellung einer Schaltanlage und eines zugeordneten Leitsystems.

Die Darstellung zeigt drei Felder E1Q1, E1Q2 und E1Q3 einer Schaltanlage und eine Bedienstation AA1 mit einem Datenverarbeitungsgerät KA0 mit üblichen Ein- und Ausgabemitteln zur Bedienung durch einen Benutzer. Die einzelnen Felder E1Q1, E1Q2 und E1Q3 weisen jeweils Leitgeräte auf, welche Steuergeräte KA1, Schutzgeräte FA1 oder Ein-/Ausgabegeräte KB1 sind.

Die hier und im Folgenden verwendeten Bezeichnungen wie AA1, KA1 etc. entsprechen dem IEC Standard 61342, was aber keinen zwingenden Zusammenhang mit dem erfindungsgemässen Verfahren hat. Die Bezeichnungen KA1, FA1, KB1, YW1, etc. bezeichnen reale Geräte und Leitsystemfunktionen einer Anlage, sowie ihre Repräsentation in einer Datenverarbeitungsanlage. Um ein bestimmtes Gerät eindeutig zu bezeichnen, wird ihm die Bezeichnung des Feldes vorangestellt. So bezeichnet beispielsweise E1Q1QA1 einen Schalter QA1 des Feldes E1Q1.

Auf den Leitgeräten sind Leitsystemfunktionen zur Steuerung und Überwachung der Primärgeräte installiert. Die Leitgeräte sind durch Kommunikationseinheiten, das heisst durch einen übergeordneten Bus YW1 und durch Prozessbusse YW2 miteinander verbunden. Den Leitsystemfunktionen sind Primärgeräte wie beispielsweise Schalter QA1, Trenner QB1,QB2 und Spannungsgeber respektive Spanunngsmessgeräte X1, X2, X3 zugeordnet. Die Primärgeräte sind durch Topologieeinheiten miteinander verbunden, also über Sammelschienen, Feldknoten und Leitungsabgänge.

Als erstes Beispiel wird die Konfiguration einer Synchrocheck-Funktion beschrieben: Diese Leitsystemfunktion überprüft die Synchronisation von Spannungen, welche beiderseits eines offenen Schalters anliegen. Nur wenn eine vorgegebene Übereinstimmung der Spannungen vorliegt, wird der Schalter zum Schliessen freigegeben. Zur Konfiguration einer Synchrocheck-Funktion für eine vorgegebene Leitsystemfunktion, welche eine Schaltersteuerfunktion des Schalters QA1 ist und auf dem Gerät KA1 des Feldes E1Q1 ausgeführt wird, läuft das erfindungsgemässe Verfahren folgendermassen ab:
a) Aufgrund einer Benutzereingabe oder durch ein übergeordnetes Konfigurationssystem wird bestimmt, dass die neu zu installierende Synchrocheck-Funktion dem Schalter QA1 des Feldes E1Q1 zugeordnet ist.
b) In gleicher Weise wird der Synchrocheck-Funktion ein Leitgerät zugeordnet, auf dem die Leitsystemfunktion installiert und ausgeführt werden soll.
c) Eine Softwareeinheit oder ein Softwareagent, welcher der Synchrocheck-Funktion zugeordnet ist, weist eine Repräsentation von Informationen, welche die Leitsystemfunktion benötigt, auf, oder implementiert ein Verfahren zur Bestimmung dieser Informationen auf. In diesem Falle bestimmt der Softwareagent, mit welchen weiteren Leitsystemfunktionen die Synchrocheck-Funktion kommunizieren muss, um ihre Aufgabe zu erfüllen. Die Synchrocheck-Funktion benötigt Messwerte von Spannungsgebern, welche die Spannungen beiderseits des Schalters erfassen. Unter Verwendung des Topologiemodells ermittelt der Softwareagent, dass sich auf einer Seite des Schalters ein Spannungsgeber X1 befindet. Auf der anderen Seite des Schalters befindet sich im Feld E1Q1 kein Spannungsgeber. Indem der Softwareagent das Topologiemodell vom Schalter ausgehend systematisch durchsucht, ermittelt er, das die gesuchte Spannung an einem der Spannungsgeber X2 oder X3 anliegt, je nachdem ob ein Trenner QB1 oder QB2 geschlossen ist. Damit sind einerseits die physikalischen Spannungsgeber bekannt und andererseits ist bekannt, welcher Spannungsgeber in Abhängigkeit von Zuständen der Trenner QB1 und QB2 im Betrieb der Anlage zu berücksichtigen ist. Aufgrund der aus dem Anlagenmodell bekannten Zuordnung zwischen Primärgeräten und Leitsystemfunktionen ist bekannt, welche Leitsystemfunktionen im Betrieb den Zustand der Trenner QB1 und QB2 und die Spannungen der Spannungsgeber X2 und X3 liefern. Damit ermittelt der Softwareagent diejenige Leitsystemfunktion, welche eine Erfassung und Aufbereitung der Messwerte der Spannungsgeber bewerkstelligt. In diesem Fall sind dies Messfunktionen, welche im Gerät KA1 des Feldes E1Q2 ausgeführt werden. Damit ist auch je eine Kommunikationsadresse dieser Messfunktionen bekannt. Indem eine standardisierte Semantik von Funktionsbeschreibungen, wie beispielsweise im IEC Standard 61850 definiert, verwendet wird, können die Leitsystemfunktion und Softwareagenten unabhängig voneinander entwickelt werden.
d) Falls das erfindungsgemässe Verfahren offline in einem Engineeringtool abläuft, wird mit diesen Kommunikationsadressen eine Kommunikationsverbindung zwischen der Synchrocheck-Funktion und den Messfunktionen konfiguriert, beispielsweise durch Einträge in Signaltabellen. Bei einer späteren Inbetriebnahme der Schaltanlage sind diese Konfigurationsdaten in die entsprechenden Leitsystemfunktionen respektive Steuergeräte und Kommunikationseinheiten ladbar. Falls das Verfahren in einer online Konfigurationsphase der Schaltanlage ausgeführt wird, werden die Kommunikationsadressen bei den betreffenden Leitsystemfunktionen und Kommunikationseinheiten eingetragen respektive geladen. Beispielsweise wird den bei Messfunktionen eingetragen, dass sie ihre Messdaten einer bestimmten Adresse, welche eine Adresse der Synchrocheck-Funktion ist, zu übermitteln haben. Umgekehrt wird bei der Synchrocheck-Funktion eingetragen, dass die benötigten Daten von den Senderadressen entsprechend den Messfunktionen erhalten werden.
e) In analoger Weise wird auch eine Kommunikationsverbindung zwischen der Synchrocheck-Funktion und der Schaltersteuerfunktion des entsprechenden Primärgerätes eingerichtet, über welche der Schaltersteuerfunktion ein Freigabesignal zum Schliessen des zugeordneten Schalters QA1 übermittelt wird.

Als zweites Beispiel wird die Konfiguration einer Verriegelungsfunktion eines Trenners beschrieben. Ein Trenner darf nur geöffnet werden, wenn die zu trennende Verbindung stromlos ist. Dies ist gewährleistet, falls aktuelle Stellungen von Schaltern und Trennern der Anlage bestimmte Bedingungen erfüllen. In der EP-A-0 224 711 ist beschrieben, wie diese Bedingungen anhand eines Topologiemodells einer Anlage automatisch bestimmt werden. Zur Überprüfung dieser Bedingungen während des Betriebs der Anlage benötigt die Verriegelungsfunktion die erwähnten aktuellen Stellungen von Schaltern respektive Trennern. Gemäss dem erfindungsgemässen Verfahren wird
a) wie beim ersten Beispiel zuerst die zu konfigurierende Verriegelungsfunktion einem Primärgerät, in diesem Falle einem Trenner, beispielsweise QB1, und einem Leitgerät zugeordnet.
b) Wie im genannten Patent EP-A-0 224 711 beschrieben, werden anhand des Topologiemodells die Schalter respektive Trenner bestimmt, deren Stellung benötigt wird, und werden die Bedingungen zur logischen Verknüpfung ihrer Stellungsinformationen ermittelt.
c) Anhand der modellierten Zuordnung zwischen Primärgeräten und Leitsystemfunktionen werden die entsprechenden Steuerfunktionen der Schalter respektive Trenner ermittelt, welche diese benötigte Stellungsinformationen aufweisen.
d) Wie im ersten Beispiel beschrieben werden Kommunikationsverbindungen zwischen den Steuerfunktionen der Schalter respektive Trenner und der Verriegelungsfunktion konfiguriert respektive eingerichtet.

In einer bevorzugten Variante des erfindungsgemässen Verfahrens werden anhand von Daten des Primärgerätemodells und/oder des Topologiemodells Konfigurationsparameter einer Leitsystemfunktion bestimmt. Beispielsweise werden aus Leistungsdaten eines Transformators, welche im Primärgerätemodell enthalten sind, in einer Überwachungsfunktion des Leitsystems automatisch Überwachungsgrenzwerte von Messwerten gesetzt. Solche Messwerte sind beispielsweise am Transformator anliegende Spannungen oder eine durch den Transformator übertragene Leistung. Weitere Beispiele für diese Variante des erfindungsgemässen Verfahrens sind:
■ Automatische Berechnung von Skalierungsparametern, die einen beispielsweise als 16-Bit Integer erfassten Messwert in SI-Einheiten umrechnen, anhand von Daten eines Messgerätes.
■ Aus der Laufzeit eines Schalters wird automatisch eine Zeitgrenze für seine Laufzeitüberwachung gesetzt.
■ Aus den Leitungsdaten einer Leitung werden Schutzparameter für Schutzfunktionen der Leitung bestimmt werden.

Ein erfindungsgemässes Computerprogrammprodukt weist einen gespeicherten Programmcode auf, der beim Betrieb auf einer Datenverarbeitungseinheit respektive auf einem oder mehreren Computern das beschriebene Verfahren zur Konfiguration eines Leitsystems einer elektrischen Schaltanlage ausführt.

### Bezugszeichenliste

- 1: Leitgerätemodellbeschreibung
- 2: Kommunikationsmodellbeschreibung
- 3: Leitfunktionsmodellbeschreibung
- 4: Primärgerätemodellbeschreibung
- 5: Topologiemodellbeschreibung
- AP: Netzwerkknoten
- BAY: Schaltfeld
- BUS: Kommunikationsbus
- CBR: Schalter
- DIS: Trenner
- DO: Datenobjekt
- IED: Intelligent Electronic Device
- LDEV: Logisches Gerät
- LN: Logischer Knoten
- PRIMDEV: Primärgerät
- PTR: Transformator
- QA1: Schalter
- QB1: Trenner
- SRV: Server
- SUBST: Unterstation
- TN: Topologischer Knoten, Element des Topologiemodells
- X1, X2, X3: Spannungsgeber
- YW1: übergeordneter Bus
- YW2: Prozessbus
- KA1: Steuergerät
- FA1: Schutzgerät
- KB1: Ein-/Ausgabegerät

## Patentansprüche

1. Verfahren zur Konfiguration eines Leitsystems einer elektrischen Schaltanlage, welches ein Leitgerätemodell zur Repräsentation von Leitgeräten und ein Leitfunktionsmodell zur Repräsentation von Leitsystemfunktionen der Schaltanlage verwendet,
**dadurch gekennzeichnet, dass** das Verfahren ein Primärgerätemodell zur Repräsentation von Primärgeräten der Schaltanlage und ein Topologiemodell der Schaltanlage verwendet und die folgenden Schritte aufweist:
a) Zuordnung einer ersten Leitsystemfunktion zu einem Primärgerät mittels des Primärgerätemodells,
b) Zuordnung der ersten Leitsystemfunktion zu einem Leitgerät mittels des Leitgerätemodells,
c) automatische Bestimmung von zweiten Leitsystemfunktionen, welche die erste Leitsystemfunktion im Betrieb der Anlage benötigt, anhand des Topologiemodells.

2. Verfahren gemäss Anspruch 1, **dadurch gekennzeichnet, dass** das Verfahren ein Kommunikationsmodell zur Repräsentation von Kommunikationsmitteln verwendet und als weiteren Schritt aufweist:
d) automatische Bestimmung von Kommunikationsverbindungen zwischen der ersten Leitsystemfunktion und den zweiten Leitsystemfunktionen anhand des Kommunikationsmodells.

3. Verfahren gemäss Anspruch 1, **dadurch gekennzeichnet, dass** einer Leitsystemfunktion ein Softwareagent zur Konfiguration der Leitsystemfunktion zugeordnet ist, welcher eine Repräsentation von Informationen, welche die Leitsystemfunktion benötigt, bestimmt und welcher die automatische Bestimmung der zweiten Leitsystemfunktionen durchführt.

4. Verfahren gemäss Anspruch 1, **dadurch gekennzeichnet, dass** das Verfahren in einer offline Engineeringphase der Schaltanlage ausgeführt wird und bei der Ausführung des Verfahrens Konfigurationsparameter von Leitsystemfunktionen und Kommunikationseinheiten bestimmt werden, die in die entsprechenden Leitsystemfunktionen respektive Kommunikationseinheiten ladbar sind.

5. Verfahren gemäss Anspruch 1, **dadurch gekennzeichnet, dass** das Verfahren in einer online Konfigurationsphase der Schaltanlage ausgeführt wird und bei der Ausführung des Verfahrens Konfigurationsparameter von Leitsystemfunktionen und Kommunikationseinheiten bestimmt und in die entsprechenden Leitsystemfunktionen respektive Kommunikationseinheiten geladen werden.

6. Verfahren gemäss Anspruch 1, **dadurch gekennzeichnet, dass** anhand von Daten des Primärgerätemodells und/oder des Topologiemodells Konfigurationsparameter einer Leitsystemfunktion bestimmt werden.

7. Computerprogrammprodukt mit einem gespeicherten Programmcode, der beim Betrieb auf einer Datenverarbeitungseinheit ein Verfahren zur Konfiguration eines Leitsystems einer elektrischen Schaltanlage ausführt, welches ein Leitgerätemodell zur Repräsentation von Leitgeräten und ein Leitfunktionsmodell zur Repräsentation von Leitsystemfunktionen der Schaltanlage verwendet,
**dadurch gekennzeichnet, dass** das Verfahren ein Primärgerätemodell zur Repräsentation von Primärgeräten der Schaltanlage und ein Topologiemodell der Schaltanlage verwendet und die folgenden Schritte aufweist:
a) Zuordnung einer ersten Leitsystemfunktion zu einem Primärgerät mittels des Primärgerätemodells,
b) Zuordnung der ersten Leitsystemfunktion zu einem Leitgerät mittels des Leitgerätemodells,
c) automatische Bestimmung von zweiten Leitsystemfunktionen, welche die erste Leitsystemfunktion benötigt, anhand des Topologiemodells.

8. Computerprogrammprodukt gemäss Anspruch 7, **dadurch gekennzeichnet, dass** das ausgeführte Verfahren ein Kommunikationsmodell zur Repräsentation von Kommunikationsmitteln verwendet und als weiteren Schritt aufweist:
d) automatische Bestimmung von Kommunikationsverbindungen zwischen dem ersten Leitsystemfunktion und den zweiten Leitsystemfunktionen anhand des Kommunikationsmodells.

## Claims

1. Method for configuration of a control system for an electrical switchgear assembly, which uses a control station model for representation of control stations, and a control function model for representation of control system functions of the switchgear assembly,
**characterized in that** the method uses a primary appliance model for representation of primary appliances in the switchgear assembly, and a topology model of the switchgear assembly, and comprises the following steps:
a) allocation of a first control system function to a primary appliance by means of the primary appliance model,
b) allocation of the first control system function to a control station by means of the control station model,
c) automatic determination of second control system functions, which the first control system function requires during operation of the assembly, on the basis of the topology model.

2. Method according to Claim 1, **characterized in that** the method uses a communication model for representation of communication means, and step, as a further comprises:
d) automatic determination of communication links between the first control system function and the second control system functions on the basis of the communication model.

3. Method according to Claim 1, **characterized in that** a control system function is allocated a software agent for configuration of the control system function, which determines a representation of information (which the control system function requires) and which carries out the automatic determination of the second control system functions.

4. Method according to Claim 1, **characterized in that** the method is carried out when the switchgear assembly is in an off-line engineering phase, and, when the method is being carried out, configuration parameters are determined for control system functions and communication units and can be loaded into the corresponding control system functions or communication units, respectively.

5. Method according to Claim 1, **characterized in that** the method is carried out when the switchgear assembly is in an on-line configuration phase, and, when the method is being carried out, configuration parameters of control system functions and communication units are determined and are loaded into the corresponding control system functions or communication units, respectively.

6. Method according to Claim 1, **characterized in that** configuration parameters for a control system function are determined on the basis of data from the primary appliance model and/or from the topology model.

7. Computer programme product having a stored programme code which, during operation on a data processing unit, carries out a method for configuration of a control system for an electrical switchgear assembly, which method uses a control station model for representation of control stations, and a control function model for representation of control system functions of the switchgear assembly,
**characterized in that** the method uses a primary appliance model for representation of primary appliances in the switchgear assembly, and a topology model of the switchgear assembly, and comprises the following steps:
a) allocation of a first control system function to a primary appliance by means of the primary appliance model,
b) allocation of the first control system function to a control station by means of the control station model,
c) automatic determination of second control system functions, which the first control system function requires during operation of the assembly, on the basis of the topology model.

8. Computer programme product according to Claim 7,
**characterized in that** the method which is carried out uses a communication model for representation of communication means and, as a further step, comprises:
d) automatic determination of communication links between the first control system function and the second control system functions on the basis of the communication model.

## Revendications

1. Procédé de configuration d'un système de contrôle d'une installation électrique utilisant un modèle d'unité de contrôle pour la représentation d'unités de contrôle et un modèle de fonctions de contrôle pour la représentation de fonctions du système de contrôle de l'installation électrique,
**caractérisé en ce que** le procédé utilise un modèle d'unité primaire pour la représentation d'unités primaires de l'installation électrique et un modèle topologique de l'installation électrique et qu'il comporte les étapes suivantes :
a. attribution d'une première fonction du système de contrôle à une unité primaire au moyen du modèle d'unité primaire,
b. attribution de la première fonction du système de contrôle à une unité de contrôle au moyen du modèle d'unité de contrôle,
c. détermination automatique de secondes fonctions du système de contrôle, nécessitant la première fonction du système de contrôle pour le fonctionnement de l'installation, en se fondant sur le modèle topologique.

2. Procédé selon la revendication 1, **caractérisé en ce que** le procédé utilise un modèle de communication pour la représentation de moyens de communication et qu'il comporte l'étape suivants :
d. détermination automatique de liaisons de communications entre la première fonction du système de contrôle et les secondes fonctions du système de contrôle en se fondant sur le modèle de communication.

3. Procédé selon la revendication 1, **caractérisé en ce qu'**une fonction du système de contrôle se voit attribué un agent logiciel pour la configuration de la fonction du système de contrôle, celui-ci déterminant une représentation d'informations nécessaires à la fonction du système de contrôle et qui effectue la détermination automatique des secondes fonctions du système de contrôle.

4. Procédé selon la revendication 1, **caractérisé en ce qu'**on exécute le procédé dans une phase d'engineering offline de l'installation électrique et que lors de l'exécution du procédé, on définit des paramètres de configuration de fonctions du système de contrôle et d'unités de communication qui peuvent être chargés dans les fonctions correspondantes du système de contrôle des unités de communications respectives.

5. Procédé selon la revendication 1, **caractérisé en ce qu'**on exécute le procédé dans une phase d'engineering online de l'installation électrique et que lors de l'exécution du procédé, on définit des paramètres de configuration de fonctions du système de contrôle et d'unités de communication qu'on charge dans les fonctions correspondantes du système de contrôle des unités de communications respectives.

6. Procédé selon la revendication 1, **caractérisé en ce qu'**on détermine les paramètres de configuration d'une fonction du système de contrôle en se fondant sur des données du modèle d'unité primaire et/ou du modèle topologique.

7. Produit logiciel d'ordinateur avec un code logiciel enregistré qui lors de l'utilisation, exécute dans une unité de traitement de données, un procédé de configuration d'un système de contrôle d'une installation électrique utilisant un modèle d'unité de contrôle pour la représentation d'unités de contrôle et un modèle de fonctions de contrôle pour la représentation de fonctions du système de contrôle de l'installation électrique,
**caractérisé en ce que** le procédé utilise un modèle d'unité primaire pour la représentation d'unités primaires de l'installation électrique et un modèle topologique de l'installation électrique et qu'il comporte les étapes suivantes :
a. attribution d'une première fonction du système de contrôle à une unité primaire au moyen du modèle d'unité primaire,
b. attribution de la première fonction du système de contrôle à une unité de contrôle au moyen du modèle d'unité de contrôle,
c. détermination automatique de secondes fonctions du système de contrôle, nécessitant la première fonction du système de contrôle, en se fondant sur le modèle topologique.

8. Produit logiciel d'ordinateur selon la revendication 7, **caractérisé en ce que** le procédé qui s'exécute utilise un modèle de communication pour la représentation de moyens de communication et qu'il comporte l'étape suivants :
d. détermination automatique de liaisons de communications entre la première fonction du système de contrôle et les secondes fonctions du système de contrôle en se fondant sur le modèle de communication.
